(19)

**Europäisches Patentamt**
**European Patent Office**
**Office européen des brevets**

(11) **EP 4 390 769 A1**

(12) **EUROPEAN PATENT APPLICATION**

(43) Date of publication:
**26.06.2024  Bulletin 2024/26**

(21) Application number: **23217935.8**

(22) Date of filing: **19.12.2023**

(51) International Patent Classification (IPC):
*G06N 3/0475* (2023.01)   *B60W 40/00* (2006.01)
*G06N 3/045* (2023.01)   *G06N 3/094* (2023.01)

(52) Cooperative Patent Classification (CPC):
**G06N 3/0475; B60W 40/00; G06N 3/045;**
**G06N 3/094**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.12.2022  US 202263433717 P**

(71) Applicant: **WAYMO LLC**
**Mountain View, CA 94043 (US)**

(72) Inventors:
• **Supeene, Isaac**
  **Mountain View, 94043 (US)**
• **Dinparastdjadid, Azadeh**
  **Mountain View, 94043 (US)**
• **Engstrom, Johan**
  **Mountain View, 94043 (US)**

(74) Representative: **Anderson, Oliver Ben et al**
**Venner Shipley LLP**
**200 Aldersgate**
**London EC1A 4HD (GB)**

(54) **ASSESSING SURPRISE FOR AUTONOMOUS VEHICLES**

(57)   Methods, systems, and apparatus, including computer programs encoded on computer storage media, for computing enhanced surprise metrics for autonomously driven vehicles. One of the methods includes receiving data representing a predicted state of an agent at a particular time, data representing an actual state of the agent for the particular time, and computing a surprise metric for the actual state of the agent based on a measure of the residual information between the predicted state of the agent and the actual state of the agent.

**EP 4 390 769 A1**

**Description**

BACKGROUND

This specification relates to autonomous vehicles and enhanced techniques for performing surprise assessments for the actions of various agents.

Autonomous vehicles include self-driving cars (including buses, trucks, etc.), boats, and aircraft. Autonomous vehicles use a variety of on-board sensors and computer systems to detect nearby objects and use such detections to make control and navigation decisions.

Fully autonomous driving by an autonomous vehicle (AV) or a self-driving car (SDC) has been a difficult and complex technical problem to solve. Part of the complexity stems from the fact that simply knowing current traffic laws, reliably detecting other vehicles and pedestrians, and being able to control the vehicle to high degrees of precision are still often not enough to achieve fully autonomous driving. This is because the actions of other drivers also need to be known or predicted, which can be a much harder problem than the mere detection of static obstacles. For example, if a cyclist is detected approaching an intersection, whether or not an AV should stop at the intersection, or keep going, largely depends on what the cyclist is expected to do and what the cyclist is expecting the AV to do, which is information that is not possible to observe directly.

SUMMARY

This specification describes how a system, e.g., an autonomous vehicle system, can use various techniques to accurately model the surprise experienced by road users in order to more efficiently and safely operate a self-driving vehicle. In particular, the system can model a measure of surprise by comparing two probability distributions, e.g., a prior and posterior distribution, and control a self-driving vehicle agent autonomously based on the surprise metric or use the surprise metric to assess performance of the agent in the driving environment. Prior techniques for computing measures of surprise are described in commonly owned U.S. Patent No. 11,447,142, and in U.S. Application Serial No. 17/339,418, which are both herein incorporated by reference.

In particular, the system can compute one or more enhanced surprise metrics. As an example, the system can compute a surprise metric based on the residual information of the predicted state of the agent and the actual state of the agent. As another example, the system can compute an antithesis surprise metric by comparing a prior prediction and an updated posterior prediction for regions determined to be outside of an expectation region as an antithesis surprise metric. In this specification, expectation regions are regions surrounding hypotheses, e.g., predicted likely observations of the agent in the prior distribution. More specifically, the system can define expectation regions based on a measure of information from sampling from the prior distribution and identify expectation regions to ensure the surprise metric is zero when the certainty of a prediction increases for an already existing hypothesis in the prior distribution.

According to a first aspect there is provided a computer-implemented method for receiving data representing a predicted state of an agent at a particular time, receiving data representing an actual state of the agent for the particular time, and computing a surprise metric for the actual state of the agent based on the residual information between the predicted state of the agent and the actual state of the agent. In this specification, residual information refers to a measure of how surprising an observation from a probability density function is, e.g., when compared to a measure of central tendency of the distribution.

According to a second aspect there is provided a computer method for receiving a prior probability distribution representing a predicted state of an agent at a particular time, wherein the prior probability distribution is based on a previous state of the agent at a previous time, and wherein the prior probability distribution has one or more associated expectation ranges that each represent a respective range of expected states of the agent at the particular time, receiving an updated state of the agent for the particular time, computing a posterior probability distribution based on the updated state of the agent, and computing an antithesis surprise metric using the posterior probability distribution, wherein the antithesis surprise metric represents how much of the posterior probability distribution exceeds the prior probability distribution in regions that do not belong to any of the expectation ranges associated with the prior probability distribution.

Particular embodiments of the subject matter described in this specification can be implemented so as to realize one or more of the following advantages.

Using the techniques described in this specification, a system can compute measures of surprise for any generated predicted and actual state of an agent. In particular, the techniques described include a residual surprise method for computing a measure of surprise using a prior prediction and the current actual state and an antithesis surprise method for computing a measure of surprise by comparing a prior prediction of an agent with a future prediction. The enhanced surprise metrics allow flexibility for the anticipation of new situations in the future instead of relying on what was surprising in the past, e.g., to compute a threshold of surprise.

The antithesis surprise metric introduced by this specification also meshes naturally with prior approaches to generating future predicted states, namely multipath generative models that generate, for a single predicted state, multiple alternative states in the future. To use the antithesis surprise metric with such models, the system can compute the posterior distribution as a mixture model, e.g., a Gaussian mixture model, that takes into consideration all of the multiple different possibilities generated by the model and define expectation ranges, which can overlap, for each of the possibilities generated by the multipath model.

Additionally, the residual information metric grounds the surprise calculation in an actual observation of the agent state, as opposed to comparing two predictions from a continuous distribution. In particular, calculating surprise with two predictions can result in a biased comparison towards higher surprise values, e.g., due to the decreased uncertainty of the posterior distribution relative to the prior distribution. The residual information metric results in a more accurate measure of surprise with reduced noise floors with respect to other surprise metrics.

Furthermore, the incorporation of expectation regions where no surprise is calculated in the antithesis surprise measure reduces the accumulation of noise by ensuring that events that confirm a hypothesis already existing in the prior are not considered surprising since the increase in certainty of an existing hypothesis cannot be considered surprising. The expectation ranges can reduce the computational resources needed to compute the surprise metric since an already existing hypothesis is not a possibility that the system needs to spend time reasoning about. Furthermore, the expectation regions can ensure that noise is not a primary contributor to surprise accumulation when modeling reaction time of the agent over a trajectory, thereby highlighting the events that are actually safety relevant.

Finally, and as will be clear from the below discussion, both the predicted state of the agent at the particular time and the actual state of the agent for the particular time may be determined based on sensor data received from one or more sensor subsystems of a vehicle. Thus, the surprise metrics described herein may allow for improved autonomous operation of a vehicle. For instance, the surprise metric(s) may be used in determining a control strategy for the vehicle. As an example, a planning system of the vehicle may use the surprise metric(s) to determine a trajectory that gives extra clearance to an agent that is determined to be behaving in a surprising manner. As another example, the surprise metric(s) may be used when training an autonomous vehicle planning model, for instance, such that the control strategies output by the trained planning model are more likely to avoid surprising situations.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a system diagram of an example system that can compute enhanced surprise metrics for an autonomous vehicle.

FIG. 2 demonstrates the reduction of a noise floor resulting from a log-likelihood surprise metric using an enhanced residual information surprise metric.

FIG. 3 illustrates an example antithesis surprise metric using expectation regions.

FIG. 4 illustrates the calculation of the example antithesis surprise metric of FIG. 3 for a scenario in which a lead vehicle is driving straight with a turn signal on.

FIG. 5 illustrates the calculation of the example antithesis surprise metric of FIG. 3 for a scenario in which a lead vehicle changes lanes without a turn signal.

FIG. 6 is a flow chart of an example process for computing a surprise metric for an agent based on residual information.

FIG. 7 is a flow chart of an example process for computing an antithesis surprise metric based on determined expectation regions.

DETAILED DESCRIPTION

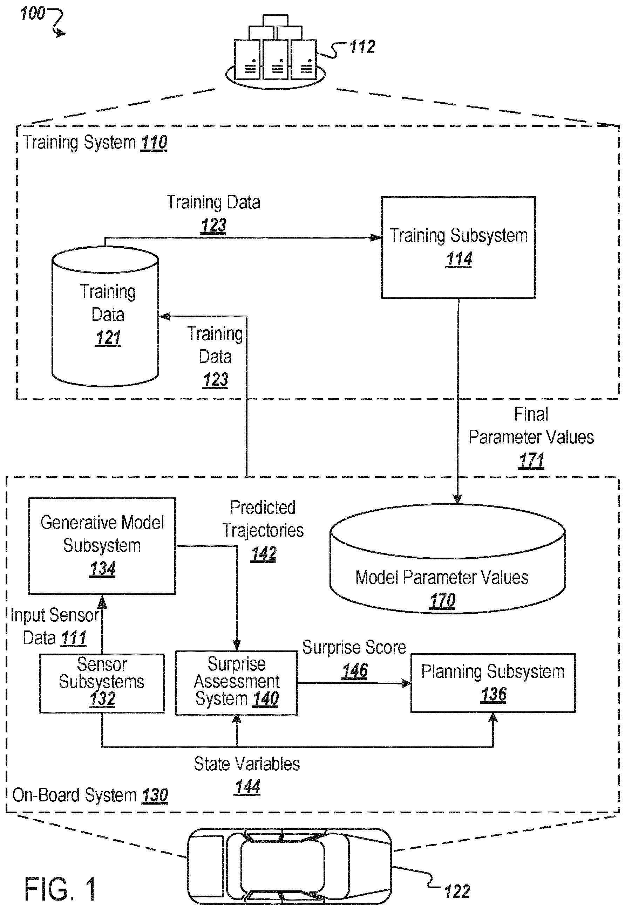

FIG. 1 is a diagram of an example system 100. The system 100 includes a training system 110 and an on-board system 120. The system 100 is an example of a system that can compute enhanced surprise metrics. The surprise metrics can also be evaluated offline. For example, surprise metrics can also be computed offline by the training system 110, e.g., using previously stored driving logs or simulated driving data.

The on-board system 120 is physically located on-board a vehicle 122. Being on-board the vehicle 122 means that the on-board system 120 includes components that travel along with the vehicle 122, e.g., power supplies, computing hardware, and sensors. The vehicle 122 in FIG. 1 is illustrated as an automobile, but the on-board system 120 can be located on-board any appropriate vehicle type. The vehicle 122 can be a fully autonomous vehicle that uses predictions about nearby objects in the surrounding environment to inform fully autonomous driving decisions. The vehicle 122 can also be a semi-autonomous vehicle that uses predictions about nearby objects in the surrounding environment to aid a human driver. For example, the vehicle 122 can rely on a planning subsystem 136 to autonomously apply the brakes if output trajectories from the model predict the vehicle 122 may collide with another object.

The on-board system 120 includes one or more sensor subsystems 132. The sensor subsystems 132 can include a combination of components that receive reflections from the environment, e.g., lidar systems that detect reflections of laser light, radar systems that detect reflections of radio waves, camera systems that detect reflections of visible light, and audio sensor systems that record sounds from the environment, to name just a few examples.

The input sensor data can indicate a distance, a direction, and an intensity of reflected energy. Each sensor can transmit one or more pulses, e.g., of electromagnetic radiation, in a particular direction and can measure the intensity of any reflections as well as the time that the reflection was received. A distance can be computed by determining how long it took between a pulse and its corresponding reflection. Each sensor can continually sweep a particular space in angle, azimuth, or both. Sweeping in azimuth, for example, can allow a sensor to detect multiple objects along a same line of sight.

The sensor subsystems 132 can provide input sensor data 155 to an on-board generative model subsystem 134. The input sensor data 155 can include data from one sensor or multiple sensors at multiple locations surrounding the vehicle 122. The input sensor data 134 thus provides a representation of the surrounding environment of the vehicle 122, which can include data representing the presence of objects.

The on-board generative model subsystem 134 can generate predicted future states and trajectories of agents based on their current states or a history window of previous states. As one example, the generative model subsystem 134 can be a multipath generative model that generates a number of predicted trajectories of the vehicle. Each predicted trajectory can represent multiple future predicted states of an agent at each of multiple future time steps, with each predicted state having one or more state variables. The predicted future states can be represented by values of state variables or probability distributions over such state variables. For example, a state variable can be an agent's position, speed, looming, and heading angle, to name just a few examples.

The on-board generative model subsystem 134 can generate the predicted trajectories in accordance with model parameter values that have been trained by a training system 110 based on training data. The generative model subsystem 134 can thus learn to generate trajectories that are representative of observations in the training data. For example, the generative model subsystem 134 can implement a generative adversarial network (GAN) that is trained to generate realistic trajectories based on what other agents have been observed to do under particular circumstances during previous driving trips. In other words, the generative model is trained to generate trajectories that are hard for a companion discriminator network to distinguish from trajectories in the training data that were actually taken by real-world agents, based on their state variables at the time of prediction.

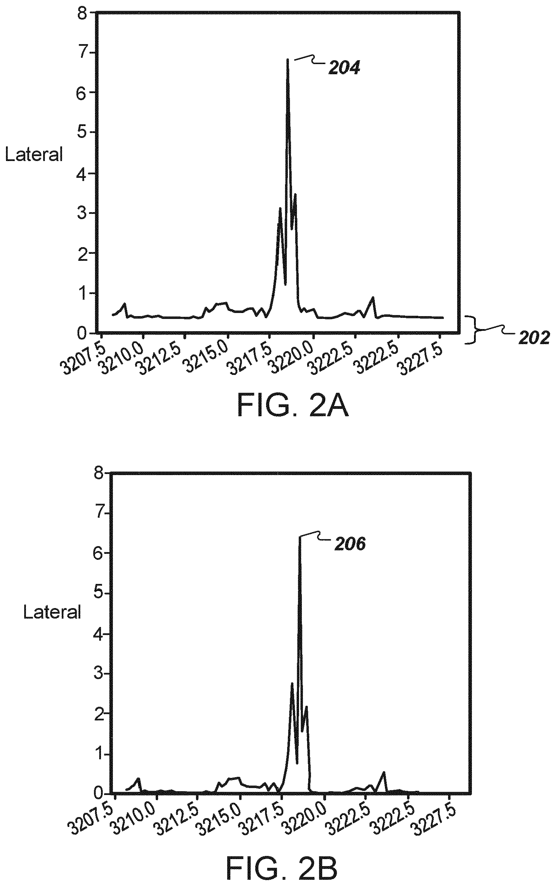

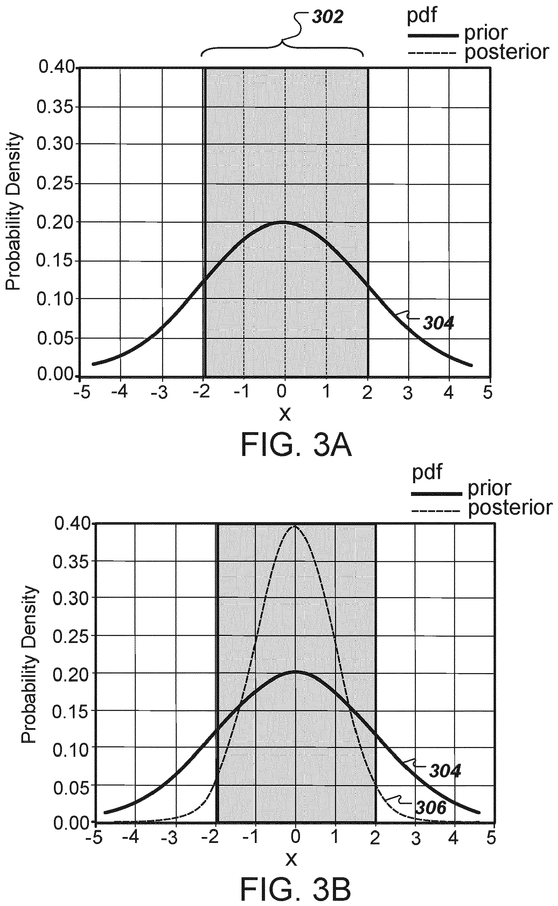

The surprise assessment subsystem 140 can use the predicted trajectories 142 generated by the generative model subsystem 134 and the values of one or more state variables 144 to compute a surprise score 146 using one or more of the enhanced surprise metrics, e.g., a residual information and antithesis surprise measure which are described in further detail in FIGS. 2 and 3. The surprise score 146 is a metric that generally represents how surprising an observer would find the behavior of an agent to be. As mentioned above, the surprise score 146 can model the surprise experienced from the perspective of the vehicle 122, or the surprise imposed on other agents due to actions of the vehicle. These two types of surprise can be referred to as experienced surprise or imposed surprise.

As shown in the example of FIG. 1, the surprise score 146 can be provided to a planning subsystem 136 that is responsible for operating the control interfaces of the vehicle, e.g., acceleration, braking, and steering systems. The surprise score 146 can be used by the planning subsystem 136 to affect planning in a number of different ways. For example, the planning subsystem 136 can use the surprise score 146 to control exposure to risk by planning routes that avoid experienced surprise. In other words, if choosing between future trajectories, the planning subsystem 136 can select trajectories having a lower probability of resulting in experienced surprise. In practice, this can mean giving other vehicles more space.

For example, if another vehicle is observed to have surprising lateral movement, e.g., the planning subsystem 136 can mitigate risk by generating a plan that avoids experienced surprise. To do so, the planning subsystem 136 can generate a path that gives extra lateral clearance than normal when overtaking the other vehicle, or the planning subsystem 136 can decide not to overtake at all in order to avoid the possibility of experienced lateral surprise by the other vehicle.

As another example, the surprise score 146 can represent how surprising the actions of the AV itself are, and the planning subsystem 136 can take steps to mitigate that surprise. In particular, the planning subsystem 136 can use the surprise score 146 to avoid expectation mismatches that impose surprise on others. In other words, if choosing between future trajectories, the planning subsystem 136 can select trajectories having a lower probability of imposing surprise on other agents. For example, if the AV swerves to avoid an unexpected animal or other debris in the road, this action would result in a high surprise score 146. The planning subsystem 136 can then modify a navigation plan to mitigate the surprise of those actions, e.g., by returning to the original navigation path as quickly as possible.

The above examples are examples of how enhanced surprise metrics can be used for online driving applications. Alternatively or in addition, the enhanced surprise metrics can be computed offline, e.g., in a datacenter, for a variety of applications. The training system 110 can be implemented in a datacenter 112. The training system 110 includes a training subsystem 114 that can implement training operations for various machine learning models, including generative models designed to generate realistic predicted trajectories. The training subsystem 114 includes a plurality of computing devices having software or hardware modules that implement the respective training operations. After training is complete, the training system 110 can optionally provide a final set of model parameter values 171 to the on-board system 120. The training system 110 can provide the final set of model parameter values 171 by a wired or wireless connection to the on-board system 120.

For example, the training subsystem 114 can have its own generative model subsystem and surprise assessment system and can use these subsystems in tandem to compute surprise scores from logged or simulated data. The advantage of using logged or simulated data is increased capacity to compute surprise scores from a greater variety of situations.

The resulting surprise scores can then be used to train other machine learning models. In general, any online application of using a surprise score can be used as a feature to another planning model. In other words, rather than using the surprise scores directly, a planning subsystem can be trained to reduce experienced or imposed surprise as reflected in the logs. In other words, the training system 110 can use the surprise scores to train a planning model that avoids surprising situations. Thus, the training system 110 can train the planning system by imposing a penalty for generating candidate driving plans that would result in high surprise scores, in terms of experienced surprise, imposed surprise, or both.

The surprise scores can also be used to evaluate the performance of an AV using either simulated or logged data. In other words, the surprise scores need not be used as features to train a model, but the surprise scores can still be used to evaluate the quality of the control systems and models of the AV. For example, when deciding between two potential model implementations of a planning subsystem, the training subsystem can select the model that resulted in a lower number or distribution of surprise scores over a logged or simulated evaluation training set.

FIG. 2 depicts how an enhanced surprise metric, e.g., a residual surprise metric, can reduce a noise floor with respect to other surprise metrics. In particular, FIG. 2 compares the calculation of a surprise metric using a log likelihood in FIG. 2A in contrast with using a residual surprise metric in FIG. 2B.

FIG. 2A illustrates a noise floor 202 that results from using a log likelihood surprise metric. The log likelihood surprise metric uses a prior probability distribution and a posterior state to compute the log likelihood surprise metric. As an example, the system 100 of FIG. 1 can calculate the log likelihood surprise metric as the surprise score 146. In this context, the probability distribution is a prediction about a future state of an agent, e.g., an AV. For example, from an initial time, the system can use a generative model, e.g., a GAN or multipath model, or another predictive machine learning model to generate a predicted distribution of states at a certain point in the future, e.g., 2, 5, or 10 seconds into the future. The prior probability distribution can represent respective previously computed likelihoods of the position, velocity, or any other appropriate state of the vehicle at that future point in time. At the future point in time, the system can use the actual posterior state of the vehicle to determine how surprising the current state of the vehicle is in light of the prior probability distribution. If the posterior state is very different from any of the possibilities in the prior distribution, the log likelihood surprise metric will result in larger values than if the posterior state is predicted with high probability by the prior distribution.

As shown in FIG. 2A, in this example, the log likelihood surprise metric generates a strong peak 204 at a timestamp around 3218.0 on the x axis, which indicates the onset of a surprising stimulus in light of the prior distribution. However, the noise floor 202 from using this metric means that even some entirely unsurprising situations will generate a non-zero surprise signal.

This phenomenon also occurs when using some distribution comparison techniques, such as Kullback-Leibler (KL) divergence, which compares the prior probability distribution to a posterior probability distribution in terms of the excess of the posterior compared to the prior, e.g., in terms of probability mass. This can happen, for example, because the system becomes more certain about the outcome. For example, when using a Gaussian Mixture Model, probability mass can shift toward a single mode present in the prior distribution, and the modes can narrow, both of which reflect the reduction of uncertainty as more evidence is accumulated over time.

This noise floor property can be undesirable for many downstream applications of using surprise that rely on accumulating surprise over time. In other words, the noise floor means that an accumulated measure of surprise can continue to build even in the absence of any surprising events. In practice, it is advantageous to have a model that assigns a probability that is zero or near zero for unsurprising events, rather than accumulating noise over time.

FIG. 2B illustrates how the noise floor can be significantly reduced using a residual information surprise metric. As an example, the system 100 of FIG. 1 can calculate the residual information surprise metric as the surprise score 146. To compute the residual information surprise metric, the system can calculate a function of an observation from a discrete distribution. If X is the observation, e.g., an observed state drawn from the probability distribution p, and Y is the most likely outcome from the probability distribution, e.g., argmax(p) for each respective probability, the residual information metric can be computed according to:

$$h_{res}(X, Y) = \log(p(Y)) - \log(p(X)) = \log(p(Y) / p(X)).$$

More specifically, the residual information is the amount of additional information gained from observing X instead of Y. In particular, the higher the discrepancy between X and Y relates more information since X is sampled from a less likely part of the distribution. Residual information for the continuous case can be derived by taking the limit of the discrete case, which can be given by:

$$\lim_{\varepsilon \to 0} h_{res}(X, Y) = \log(\rho(Y) / \rho(X)).$$

FIG. 2B illustrates a surprise metric computed using residual information. In this example, a peak 206, similar to the peak 204, is generated at substantially the same point in time, while the noise floor 202 has been reduced or is entirely absent. Thus, this figure illustrates how the residual information surprise metric can predict the same information about surprising stimuli but with a substantially reduced noise floor.

As another example, the residual information surprise metric can be combined with lookahead. To do so, the system can use a generalized version of the residual information formulation, which operates on a posterior distribution of a future time step rather than a single posterior state of a current time step. This metric can be thought of intuitively as evaluating how surprising the least surprising hypothesis is.

To compute residual information with lookahead, the system can take as input a prior distribution P at a first time and a posterior distribution Q at a second time that predicts the agent's state at a third time. The time interval between the first and second time is the lookahead. In some cases, the lookahead can be a tunable parameter. In other words, the lookahead portion can be provided by using the posterior distribution that is still looking into the future at the third point in the time sequence of the first, second, and third times. To compute the residual information with lookahead metric, the system can compute:

$$\mathscr{R}(P; Q) = \min_x(h_{res}(x; P) + h_{res}(x; Q)).$$

This formulation involves taking every point on the x axis and computing the residual information with respect to the prior distribution and with respect to the posterior distribution. The system then adds the values together and finds the minimum. Intuitively, this metric means that if there is any common hypothesis between the prior and the posterior distributions, the metric will indicate an unsurprising event.

FIG. 3 depicts an example prior and posterior distribution and illustrates an additional example of an enhanced surprise metric, e.g., an antithesis surprise metric that defines expectation regions to determine whether to accumulate surprise. The antithesis surprise metric operates on the principle that it is not surprising to observe additional evidence for an outcome that was already within expectations. For example, if a vehicle is predicted to stay in its lane and then it actually does, this is not a surprising outcome. However, for some distribution comparison metrics, such as KL divergence, the difference in the prior and the posterior distributions will generate some surprise signal for such unsurprising events that merely represent an increase in certainty for a hypothesis already represented in the prior.

In particular, FIG. 3A illustrates a prior probability distribution 304 with an expectation range 302. As described above, the prior probability distribution can represent a future state, e.g., a position of an agent at a future point in time. The expectation range 302 is some proper subset of the prior distribution 304, illustrated by the shaded region of FIG. 3A. The system can define any appropriate expectation region, which can be event-specific, e.g., lane changes, or prediction-specific, e.g., different possibilities in a multi-prediction model. In other words, a prior distribution can have multiple expectation regions if multiple distinct future predictions are possible, e.g., staying in a lane or changing lanes. In some implementations, the system generates the expectation regions as the boundaries at which a sample contains no more than an expected amount of information.

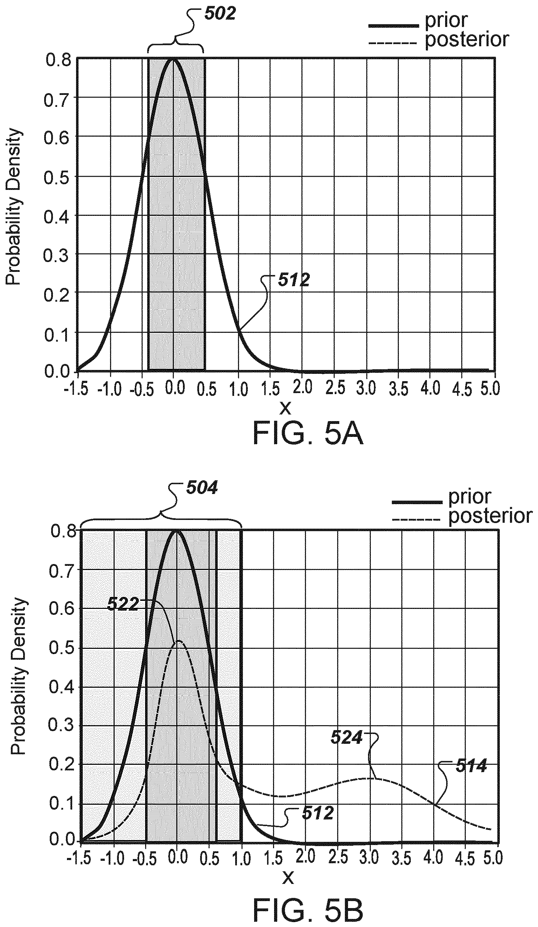

FIG. 3B illustrates a posterior distribution 306 along with the prior distribution 304. In this case, the posterior distribution 306 has a sharper peak, which can result from gathering more information that confirms the hypothesis as represented in the prior prediction. In this example, the entirety of the posterior distribution that exceeds the prior distribution is within the expectation region. Therefore, this would not be considered a surprising event. The antithesis surprise metric can be computed by integrating the area of the posterior distribution that exceeds the prior distribution outside of any expectation regions, as will be described in further detail in FIG. 5.

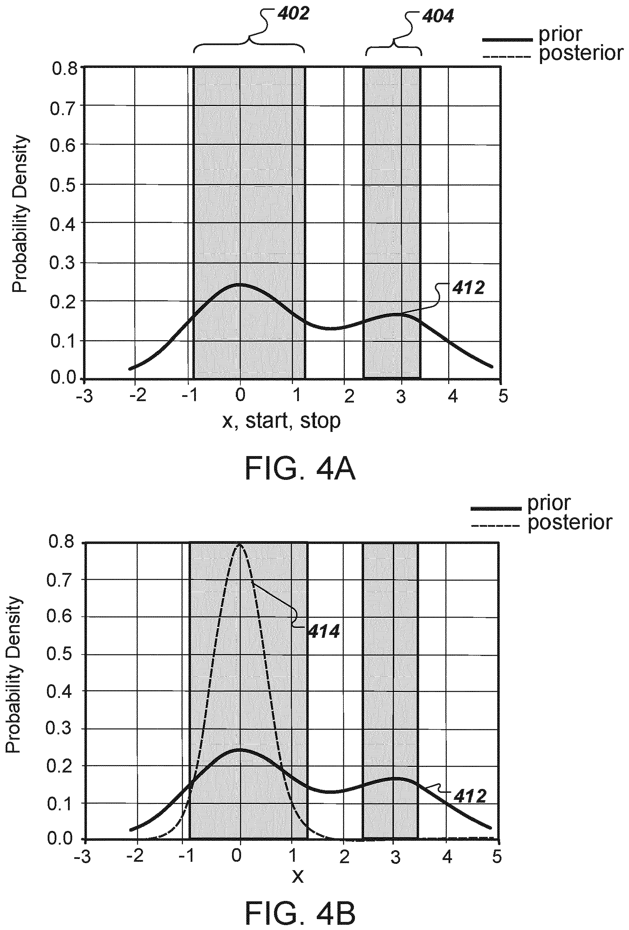

FIG. 4 illustrates the calculation of the example antithesis surprise metric of FIG. 3 for a scenario in which a lead vehicle, e.g., a vehicle in front of an agent, is driving straight with a turn signal on.

FIG. 4A illustrates a prior probability distribution 412 having two expectation regions 402 and 404. This prior distribution 412 can be generated to support two hypotheses: (i) it is possible that the vehicle makes a subsequent lane change or turns in accordance with the turn signal, but (ii) it is also possible that the turn signal is simply turned off and the vehicle remains in the same lane. These two possibilities are represented by the expectation regions 402 and 404, which are defined around both respective hypotheses in the prior distribution.

FIG. 4B illustrates a posterior probability distribution 414. In the particular example depicted, the turn signal was simply turned off and the lead vehicle remained in its lane. Therefore, the posterior probability distribution 414 has a peak within the first expectation region 402, e.g., the expectation region around the hypothesis that the vehicle stays in its lane. There are no parts of the posterior probability distribution 414 that exceed the prior probability distribution 412 outside of any of the expectation regions 402 and 404. Therefore, this event is not considered surprising.

Intuitively, this means that the narrowing of possibilities as time passes is not a surprising development. Incorporating expectation regions for calculating enhanced surprise metrics can also provide computational advantages because a hypothesis being confirmed within a defined region of expectation is not a possibility that the system needs to spend time reasoning about. In other words, confirming a hypothesis that already existed in the prior is not surprising. Furthermore, new information can disconfirm a prior hypothesis and not be surprising, e.g., if there are two likely hypotheses, or it can not disconfirm a prior hypothesis and not be surprising, e.g., if there is only one likely hypothesis.

In this particular case, the event that did not happen, e.g., the lead vehicle turning, is not a safety relevant event because it is an event that did not happen. In particular, defining the surprise metric based on the area of the posterior distribution that exceeds the prior distribution outside of the expectation regions illustrates how the antithesis surprise metric can reduce the noise floor that can exist for other surprise metrics. This is a computational advantage over prior approaches that might trigger contingency planning for events after any significant difference between the posterior and prior probability distributions, even if the difference represents the confirming of a previous hypothesis in the prior.

FIG. 5 demonstrates how the example antithesis surprise metric of FIG. 3 can additionally reduce a noise floor with respect to other surprise metrics. In particular, FIG. 5 compares the calculation of a surprise metric for a scenario in which a lead vehicle is staying within its lane in FIGS. 5A and 5B.

FIG. 5A illustrates a prior probability distribution 512 having an expectation range 502. In this example, a vehicle is staying within its lane and is expected to do so in the future, e.g., because of the absence of a turn signal, which is what is represented by the expectation range 502.

FIG. 5B illustrates a posterior probability distribution 514 due to the activation of a turn signal. The new information provided by the activation of the turn signal results in a new hypothesis of what will happen in the future, e.g., a hypothesis that was not in the prior distribution. Therefore, the posterior probability distribution 514 includes two peaks: a first peak 522, representing the vehicle staying in the lane, and a second peak 524, representing the vehicle changing lanes.

The system can then compute the antithesis surprise metric as the area of the posterior distribution 514 that exceeds the prior distribution 512 outside of the expectation region 502. The region 504, which includes the entirety of the expectation range 502, represents the range of values in which the posterior has a lower likelihood than the prior. Other ranges of the posterior distribution outside the region 504 will contribute toward the antithesis metric. Thus, the entire area under the peak 524 to the right of the region 504 would be considered, e.g., summed up as a measure of surprise, when the system computes the antithesis surprise metric, and the system would consider this a surprising event that would need to be evaluated carefully. For example, the system could perform contingency planning in the event that the vehicle does in fact change lanes, which could require the system to slow down or alter the course of an AV.

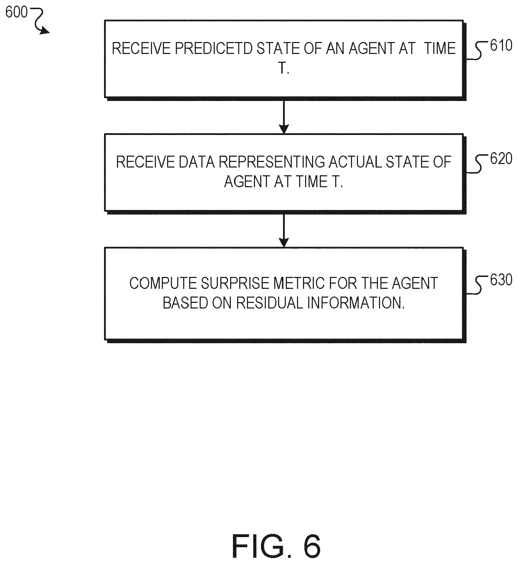

FIG. 6 is a flow chart of an example process for computing a surprise metric for an agent based on residual information. For convenience, the process 600 will be described as being performed by a system of one or more computers located in one or more locations. For example, a system, e.g., the system 100 of FIG. 1, appropriately programmed in accordance with this specification, can perform the process 600.

In particular, the system can receive data representing a predicted state of an agent at a particular time t (step 610). As an example, the data received can be an observation from prior probability distribution predicted from a generative model, e.g., a multipath model. As another example, the data can be an observation from a prior probability distribution compiled from stored driving logs or simulated driving data. The system can also receive data representing an actual state of the agent for the particular time t (step 620). In particular, the data received can be an observation from a posterior probability distribution. Both the predicted state and the actual state can indicate a distance, direction, etc. of the agent. In certain implementations, the order of steps 610 and 620 can be interchangeable.

The system can then compute a measure of surprise for the actual state of the agent based on the residual information between the predicted state of the agent and the actual observed state of the agent (step 630). The residual information can represent how surprising a least surprising prediction is, e.g., the amount of additional information gained by observing the actual state as opposed to the predicted state. More specifically, the residual information can provide a measure of how surprising an actual observation from a probability density function is by comparing the actual observation to a measure of central tendency of the distribution.

In particular, the system can compute a measure of the discrepancy between the predicted state of the agent, e.g., an observation from a prior distribution, and the actual state of the agent, based on a ratio of the residual information of the predicted state over the residual information of the actual state. More specifically, the system can compute a first value Y and a second value X, where the values of Y and X are derived from the most likely predicted state and actual observed state of the agent, respectively. For example, Y and X can be the probability densities of the predicted and observed states. The system can then compute a function of Y and X, e.g., a logarithm of the ratio between Y and X, as the residual information surprise metric.

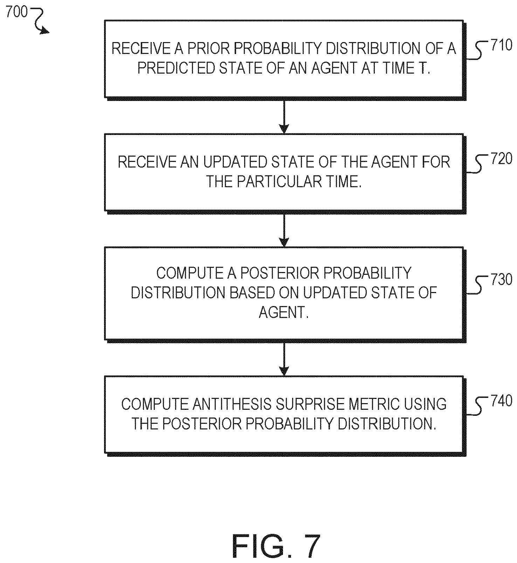

FIG. 7 is a flow chart of an example process for computing an antithesis surprise metric based on determined expectation regions. For convenience, the process 700 will be described as being performed by a system of one or more computers located in one or more locations. For example, a system, e.g., the system 100 of FIG. 1, appropriately programmed in accordance with this specification, can perform the process 700.

The system can receive a prior probability distribution of a predicted state of an agent at a particular time t (step 710). In particular, this can be a prior probability distribution based on a previous state of the agent at a previous time. In some cases, the prior probability distribution can be sourced from a generative model, e.g., a GAN or multipath model, or another predictive machine learning model that outputs a prediction of a future state of an agent. More specifically, the system can generate a number of predicted future states of the agent from the current state at the particular time t, e.g., predicted future states t+1 or t+2 seconds into the future, as the prior probability distribution. As an example, the prior probability distribution can have one or more associated expectation ranges, e.g., ranges that represent a range of expected states of the agent at the particular time t. The system can define expectation ranges for each of the possibilities generated by the generative model based on a measure of information by sampling from the prior distribution.

The system can receive an updated state of the agent for the particular time t (step 720) and compute a posterior probability distribution based on the updated state of the agent (step 730). In particular, the system can then compute the posterior distribution as a mixture model, e.g., a Gaussian mixture model, that takes into consideration all of the multiple different possibilities generated by the model.

The system can then compute an antithesis surprise metric using the posterior probability distribution (step 740). In particular, the antithesis surprise metric can represent how much of the posterior probability distribution exceeds the prior probability distribution in regions that were unexpected, e.g., regions that do not belong to any of the ranges of expected states associated with the expectation regions of the prior probability distribution. More specifically, the antithesis surprise metric can be taken as zero within the defined expectation ranges since the posterior distribution exceeding the prior distribution in an expectation range indicates a confirmation of a hypothesis within the prior distribution rather than surprising information.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, off-the-shelf or custom-made parallel processing subsystems, e.g., a GPU or another kind of special-purpose processing subsystem. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program which may also be referred to or described as a program, software, a software application, an app, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, subprograms, or portions of code. A computer program can be deployed to be executed on one computer or on multiple computers that are located at one site or distributed across multiple sites and interconnected by a data communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and pointing device, e.g., a mouse, trackball, or a presence sensitive display or other surface by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone, running a messaging application, and receiving responsive messages from the user in return.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain some cases, multitasking and parallel processing may be advantageous.

**Claims**

1. A computer-implemented method comprising:

   receiving a prior probability distribution representing a predicted state of an agent at a particular time, wherein the prior probability distribution is based on a previous state of the agent at a previous time, and wherein the prior probability distribution has one or more associated expectation ranges that each represent a respective range of expected states of the agent at the particular time;
   receiving an updated state of the agent for the particular time;
   computing a posterior probability distribution based on the updated state of the agent; and
   computing an antithesis surprise metric using the posterior probability distribution, wherein the antithesis surprise metric represents how much of the posterior probability distribution exceeds the prior probability distribution in regions that do not belong to any of the expectation ranges associated with the prior probability distribution.

2. The method of claim 1, wherein the prior probability distribution is a mixture model comprising probabilities associated with a plurality of distinct predictions.

3. The method of claim 2, wherein the plurality of distinct predictions are generated by a generative model that outputs, for a particular state, a plurality of predictions of a state of the agent at a future point in time.

4. The method of claim 3, wherein each prediction of the state of the agent is associated with a respective expectation range.

5. The method of claim 4, wherein the antithesis surprise metric is zero when the posterior distribution does not exceed the prior distribution outside of any expectation ranges.

6. The method of any of claims 1 to 5, wherein the previous state of the agent at the previous time and the updated state of the agent for the particular time are determined based on sensor data from one or more sensor subsystems of a vehicle.

7. The method of claim 6, wherein the method comprises a planning system of the vehicle determining a control strategy for the vehicle based on the antithesis surprise metric or wherein the method comprises training an autonomous vehicle planning model based on the antithesis surprise metric.

8. A computer-implemented method comprising:

   receiving data representing a predicted state of an agent at a particular time;
   receiving data representing an actual state of the agent for the particular time; and
   computing a surprise metric for the actual state of the agent based on a measure of the residual information between the predicted state of the agent and the actual state of the agent.

9. The method of claim 8, wherein computing the surprise metric based on the measure of residual information comprises:

   computing a first value Y of a probability density function for the predicted state of the agent;
   computing a second value X of the probability density function for the actual state of the agent; and
   computing the surprise metric based on a ratio between Y and X.

10. The method of claim 9, wherein the actual state of the agent is a posterior probability distribution, and further comprising computing the measure of residual information based on the posterior probability distribution.

11. The method of claim 10, wherein the measure of residual information represents how surprising a least surprising prediction is among a plurality of outcomes in the posterior distribution.

12. The method of any of claims 8 to 11, wherein the received data representing the predicted state of the agent at the particular time, and the received data representing the actual state of the agent for the particular time are determined based on sensor data from one or more sensor subsystems of a vehicle.

13. The method of claim 12, wherein the method comprises a planning system of the vehicle determining a control strategy for the vehicle based on the surprise metric or wherein the method comprises training an autonomous vehicle planning model based on the surprise metric.

14. A system comprising: one or more computers and one or more storage devices storing instructions that are operable, when executed by the one or more computers, to cause the one or more computers to perform the method of any one of claims 1 to 13.

15. A computer storage medium encoded with a computer program, the program comprising instructions that are operable, when executed by data processing apparatus, to cause the data processing apparatus to perform the method of any one of claims 1 to 13.

100

112

Training System _110_

Training Data
_123_

Training
Data
_121_

Training
Data
_123_

Training Subsystem
_114_

Final
Parameter Values
_171_

Generative Model
Subsystem
_134_

Predicted
Trajectories
_142_

Model Parameter Values
_170_

Input Sensor
Data _111_

Sensor
Subsystems
_132_

Surprise
Assessment
System _140_

Surprise Score
_146_

Planning Subsystem
_136_

State Variables
_144_

On-Board System _130_

FIG. 1

122

FIG. 2A

FIG. 2B

FIG. 3A

FIG. 3B

FIG. 4A

FIG. 4B

FIG. 5A

FIG. 5B

600

RECEIVE PREDICETD STATE OF AN AGENT AT TIME
T. 610

RECEIVE DATA REPRESENTING ACTUAL STATE OF
AGENT AT TIME T. 620

COMPUTE SURPRISE METRIC FOR THE AGENT
BASED ON RESIDUAL INFORMATION. 630

# FIG. 6

700

RECEIVE A PRIOR PROBABILITY DISTRIBUTION OF A
PREDICTED STATE OF AN AGENT AT TIME T.
710

RECEIVE AN UPDATED STATE OF THE AGENT FOR
THE PARTICULAR TIME.
720

COMPUTE A POSTERIOR PROBABILITY
DISTRIBUTION BASED ON UPDATED STATE OF
AGENT.
730

COMPUTE ANTITHESIS SURPRISE METRIC USING
THE POSTERIOR PROBABILITY DISTRIBUTION.
740

FIG. 7

Europäisches Patentamt
European Patent Office
Office européen des brevets

## EUROPEAN SEARCH REPORT

**Application Number**

EP 23 21 7935

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AVILA LUIS ET AL: "An active inference approach to on-line agent monitoring in safety-critical systems", ADVANCED ENGINEERING INFORMATICS, ELSEVIER, AMSTERDAM, NL, vol. 29, no. 4, 13 August 2015 (2015-08-13), pages 1083-1095, XP029313420, ISSN: 1474-0346, DOI: 10.1016/J.AEI.2015.07.008 * abstract * * Sections 1, 2.2, 3.2, 4-4.2 * * figures 2-5 * | 1-15 | INV. G06N3/0475 B60W40/00 G06N3/045 G06N3/094 |
| A | RICHARD JONES ET AL: "Exploring Bayesian Surprise to Prevent Overfitting and to Predict Model Performance in Non-Intrusive Load Monitoring", ARXIV.ORG, CORNELL UNIVERSITY LIBRARY, 201 OLIN LIBRARY CORNELL UNIVERSITY ITHACA, NY 14853, 16 September 2020 (2020-09-16), XP081764475, * abstract * * Sections 1, 3, 5 * | 1-15 | |
| A | AVILA LUIS ET AL: "Behavior monitoring under uncertainty using Bayesian surprise and optimal action selection", EXPERT SYSTEMS WITH APPLICATIONS, ELSEVIER, AMSTERDAM, NL, vol. 41, no. 14, 6 May 2014 (2014-05-06), pages 6327-6345, XP028865299, ISSN: 0957-4174, DOI: 10.1016/J.ESWA.2014.04.031 * Sections 1 and 3 * | 1-15 | |

**TECHNICAL FIELDS SEARCHED (IPC)**

G06N
B60W

-/--

The present search report has been drawn up for all claims

| Place of search | Date of completion of the search | Examiner |
|---|---|---|
| The Hague | 11 April 2024 | Mariani, Giovanni |

page 1 of 2

Europäisches
Patentamt

European
Patent Office

Office européen
des brevets

**EUROPEAN SEARCH REPORT**

Application Number

EP 23 21 7935

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOHAN ENGSTR\"OM ET AL: "Modeling road user response timing in naturalistic settings: a surprise-based framework", ARXIV.ORG, CORNELL UNIVERSITY LIBRARY, 201 OLIN LIBRARY CORNELL UNIVERSITY ITHACA, NY 14853, 18 August 2022 (2022-08-18), XP091297542, * abstract * * Sections 1-3 * ----- | 1-15 | |
| | | | **TECHNICAL FIELDS SEARCHED** (IPC) |

The present search report has been drawn up for all claims

| Place of search | Date of completion of the search | Examiner |
|---|---|---|
| The Hague | 11 April 2024 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 4 390 769 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11447142 B
- US 339418